Europäisches Patentamt

(19) European Patent Office

Office européen des brevets

(11) Veröffentlichungsnummer: **0 006 596** B1

(12) **EUROPÄISCHE PATENTSCHRIFT**

(45) Veröffentlichungstag der Patentschrift:
27.01.82

(51) Int. Cl.³: **G 07 F 7/08, G 07 F 7/02**

(21) Anmeldenummer: 79102078.7

(22) Anmeldetag: 23.06.79

(54) Schaltanordnung zur Anzeige eines Wert-Saldos.

(30) Priorität: 27.06.78 DE 2828111

(43) Veröffentlichungstag der Anmeldung:
09.01.80 Patentblatt 80/1

(45) Bekanntmachung des Hinweises auf die Patenterteilung:
27.01.82 Patentblatt 82/4

(84) Benannte Vertragsstaaten:
BE CH FR GB IT NL SE

(56) Entgegenhaltungen:
FR-A-2 286 565
FR-A-2 330 292
FR-A-2 339 215
US-A-3 602 695
US-A-3 653 480
US-A-3 935 933
US-A-4 020 325
US-A-4 068 213

(73) Patentinhaber: Tele-Alarm, Nachrichtentechnische Geräte GmbH Herstellungs- und Vertriebsgesellschaft & Co.KG, Sandbergstrasse 11,
D-8501 Schwaig-Behringersdorf (DE)

(72) Erfinder: Hofmann, Otto, Bernstädterstrasse 9,
D-8500 Nürnberg (DE)
Erfinder: Nagler, Georg, Bahnhofstrasse 1,
D-8481 Oberwildenau (DE)

(74) Vertreter: Rau, Manfred, Dr. Dipl.-Ing.,
Postfach 91 04 80 Lange Zeile 30,
D-8500 Nürnberg 91 (DE)

## Schaltungsanordnung zur Anzeige eines Wert-Saldos

Die Erfindung betrifft eine Schaltanordnung gemäß dem Oberbegriff des Patentanspruches 1.

Auf vielen Gebieten des täglichen Lebens erweist es sich als lästig, sich des vielfältigen Dienstleistungs- und Warenangebotes vergleichsweise geringen Wertes nur bedienen zu können, wenn ein passender Gebührenbetrag — womöglich ausschließlich in bestimmten Münzsorten — entrichtet wird. Das trifft beispielsweise auf den großen Bereich der Automatenanlagen zur Abgabe von Waren oder zur Benutzungs-Freigabe auf dem Dienstleistungssektor (Schließfachanlage, Zutritts-Drehtür zu Ausstellungen oder Bädern) zu. Darüber hinaus ist es beispielsweise bei sportlicher Betätigung lästig, Kleingeld mit sich führen zu müssen, um Sportgeräte mieten oder Einlaß in ein Duschbad oder eine Sauna gewährt zu bekommen. Aufgrund der Außentemperaturen und der speziellen Bekleidung ist es beim Wintersport besonders lästig, beispielsweise an der Talstation eines Lifts Kleingeld abgezählt bereithalten zu müssen. Auch der Übergang von einer noch nicht vollständig verbrauchten aber für eine weitere Fahrt nicht ausreichenden Abschnitt-Streifenkarte auf eine neue Abschnitt-Streifenkarte bei Benutzung öffentlicher Verkehrsmittel ist lästig, weil die neue Abschnitt-Streifenkarte nur gegen Entrichtung eines bestimmten Betrages ausgegeben wird und die Berücksichtigung des Guthaben-Restes auf der alten Abschnitt-Streifenkarte beim Entwerten der entsprechend verminderten Anzahl von Abschnitten auf der neuen Karte zu Irrtümern führen kann.

Auf dem Gebiet der bargeldlosen Bezahlung und der Saldo-Ermittlung sind Schaltanordnungen bekannt, die beispielsweise in Münzfernsprechern neuerer Art angewandt werden. Diese Schaltanordnungen zeigen den Saldo in Form des Restguthabens an, der sich aus der Münzvorgabe einerseits und der Belastung nach Maßgabe des Gesprächs-Zeittaktes andererseits momentan ergibt.

Eine andere Art der Anzeige eines Wert-Saldos stellen die Mehrfahrten-Streifenkarten der öffentlichen Verkehrsmittel dar, die gegen eine Bar-Vorleistung ausgegeben werden und nach Maßgabe der Beanspruchung des Verkehrsmittels abschnittsweise zu entwerten sind, während die Anzahl der noch nicht entwerteten Abschnitte den noch verfügbaren Saldo darstellt.

Weiterhin sind Magnetkarten bekannt, deren abgespeicherte Daten abgefragt werden und mittels derer Dienstleistungen beansprucht werden können.

Eine Schaltanordnung der gattungsgemäßen Art ist aus de FR-A-2 339 215 bekannt, die ein Konzept für die bargeldlose Beanspruchung von Dienstleistungs- und Warenangeboten mittels Karte und darauf angeordneter Magnetspur offenbart. Dabei werden von einer zentralen Recheneinheit über eine jeweils nicht näher erläuterte Elektronik die einzelnen Komponenten des Anlagenkonzepts angesteuert, wobei über eine Wahltastatur die beanspruchte Leistung zuvor eingegeben wird. Zur Abwicklung dieser bargeldlosen Dienstleistungen sind unter anderem eine Aufnahmeeinheit für die Magnetkarte, ein Kartenleser und ein Entkodierer neben einer Preisanzeige vorgesehen.

Aus der US-A-3 653 480 ist eine automatische Verkaufsanlage bekannt, die darauf abgestellt ist, bargeldlos zu arbeiten. Dazu werden über eine Lese- und Schreibeinheit die auf einer Magnet- bzw. Identitätskarte gespeicherten Daten in einen Speicher gegeben, der entsprechend dem Wert der gewählten Ware die auf der Kreditkarte abgespeicherten Daten auf das neue Saldo ändert. Die bekannte Anlage ist auch mit einer Münzrückgabeeinrichtung ausgestattet.

Diese Verkaufsanlagen weisen jedoch keine Vorkehrungen auf, um gerade im Hinblick auf die leicht manipulierbaren Saldokarten einen Betrug zu verhindern. Weiterhin werden bereits leicht verschmutzte und beschädigte Karten von den Automaten dieser Art nicht angenommen, oder es treten infolge dieser Verschmutzungen Störungen im Betriebsablauf auf.

Aus der US-A-4 181 920 ist eine Anordnung zum Transport und Dechiffrieren von Magnetkarten bekannt, bei der die Magnetkarten zwischen zwei Transportbändern, die jeweils aus paarweise mit Abstand nebeneinander angeordneten Transportriemen bestehen, aufgenommen werden. Der Antrieb erfolgt über einen Motor, der eines der Transportbänder in fest vorgegebener Laufrichtung antreibt, so daß die Magnetkarte von einem Einlaß zu einem Auslaß gefördert wird. Auf diesem Weg wird die Magnetkarte, die außerhalb des Angriffsbereiches der Transportbänder einen Magnetstreifen aufweist, an einem Magnetkopf einmalig vorbeigeführt. Derartige Transport- und Lesevorrichtungen, die hauptsächlich in U-Bahn-Stationen an Kontrollzugängen eingesetzt werden, sind dahingehend ausgelegt, im Zuge einer Massenabfertigung das Ticket in Form der Magnetkarte möglichst schnell zu entschlüsseln und an den Besitzer zurückzugeben. Beschädigte oder verschmutzte Tickets können Störungen in der Transportvorrichtung hervorrufen, so daß diese Tickets mehrfach eingegeben werden müssen.

Der Erfindung liegt die Aufgabe zugrunde, eine Schaltanordnung der gattungsgemäßen Art zur praktisch bargeldlosen Beanspruchung von Dienstleistungs- und Warenangeboten auch unterschiedlicher Wertigkeit so weiterzubilden, daß der Informationsaustausch mit der Saldokarte von einer einfach ansteuerbaren, störunanfällig arbeitenden Einrichtung auch bei ungünstigsten Betriebsbedingungen stattfindet und Betrug durch Manipulation der Saldokarte vermieden wird.

Diese Aufgabe wird erfindungsgemäß durch die Merkmale des Kennzeichnungsteiles des Anspruches 1 gelöst.

Das Einlesen der Saldokarte und das Abspeichern des neuen Saldos erfolgt mit einer einfach ansteuerbaren, störunanfällig arbeitenden elektro-mechanischen Einrichtung.

In ein Lese-Schreib-Gerät wird eine Magnetkarte über ein umlaufendes Transportband eingezogen. Bereits unmittelbar nach einer Eingabeöffnung für die Magnetkarte sind zwei Format-Gabelkoppler in einem vorbestimmten Abstand zueinander angeordnet, die in Bezug auf die für die Magnetkarte spezifischen Formatwerte angeordnet und mit einer entsprechenden Elektronik versorgt sind. Somit wird schon unmittelbar am Eingang des Lese-Schreib-Gerätes die Magnetkarte einer Prüfung unterzogen und entsprechende Signale an eine dem Lese-Schreib-Gerät nachgeschalteten Schaltanordnung gegeben. Durch das Trum wird die Magnetkarte an einer entsprechenden, im Lese-Schreib-Gerät angeordneten Führungsunterlage entlang gezogen und über Lese- und Schreibkopf, die im Bereich des Trum angeordnet sind, geführt. Mit einem das Transportband antreibenden, umsteuerbaren Antriebsmotor kann die Magnetkarte in beliebiger Weise über Lese- und Schreibkopf hin und her geschoben werden.

Es ist also nicht nur eine einmalige Abtastung der auf der Magnetspur der Karte gespeicherten Informationen möglich, sondern die Karte kann beliebig oft, nach jeweiliger Umsteuerung des Antriebsmotores bzw. des Transportbandes, über Lese- bzw. Schreibkopf gefahren werden. Weiterhin ist ein Ablesen der Daten auch entgegengesetzt der Einzugsrichtung der Magnetkarte möglich. In Verbindung mit den eingangsseitig des Lese-Schreib-Gerätes angeordneten Format-Gabelkopplern ist also eine umfangreiche über die dem Lese-Schreib-Gerät nachgeschaltete Schaltung vorgebbare Kontrolle möglich. Dies ist beispielsweise dann vorteilhaft, wenn die Informationen auf einer feuchten oder verschmutzten Magnetkarte nicht beim erstmaligen Abtasten des Lesekopfes von diesem erfaßt werden. Durch die Gabelkoppler-Anordnung können nicht nur Betriebsstörungen aufgrund Verwendung von nach ihrem Format für das Lese-Schreib-Gerät nicht bestimmter Karten von vornherein vermieden werden, sondern zugleich Trickbetrug durch Duplizieren einer Saldokarte mit serieller Mehrfach-Informationsabspeicherung auf ihrer Magnetspur ausgeschlossen werden.

Störunanfälliger Betrieb beim Ablesen und Neubeschreiben der Information auf der Magnetspur der Saldokarte wird durch die zweckmäßige Weiterbildung nach Patentanspruch 2 noch gefördert.

Die Anordnung der Lese- und Schreibköpfe nach Patentanspruch 3 weist den Vorteil auf, daß die rauhe Außenfläche des Transportbandes unmittelbar vor und nach Hinweggleiten einer Saldokarte über die Lese- und Schreibköpfe deren aktiven Flächen im Bereich der Streufeld-Schlitze reinigt.

Eine Gabelkoppler-Anordnung nach Patentanspruch 4 weist den Vorteil auf, Betriebsstörungen aufgrund Verwendung von nach ihrem Format für das Lese-Schreib-Gerät nicht bestimmten Saldokarten von vornherein zu vermeiden.

Die weiterbildende Ausgestaltung nach Patentanspruch 5 stellt sicher, daß die Magnetspur über ihre gesamte Länge ausgelesen bzw. neu beschrieben wird, dennoch aber zusätzliche schaltungstechnische Maßnahmen zum Einziehen oder für die Bewegungsumkehr und Ausgabe einer Saldokarte nicht erforderlich sind, weil die entsprechende Umsteuerung des Transportband-Antriebsmotors über die Gabelkoppler zu einem Zeitpunkt erfolgt, da die in Behandlung befindliche Saldokarte den aktiven Transportband-Trum noch nicht verlassen hat.

Eine Lesekopf-Schreibkopf-Anordnung gemäß Patentanspruch 6 erbringt den besonderen Vorteil, neu auf die Magnetspur übertragene Informationen unmittelbar überprüfen bzw. als fehlerhaft erkannte Informationen auf der Magnetspur im Zuge der Saldokarten-Ausgabe noch korrigieren zu können.

Die zusätzliche Maßnahme nach Patentanspruch 7 ermöglicht eine schaltungstechnisch besonders wenig aufwendige Steuerung der Bewegung der Saldokarte beim Übergang zwischen Auswerten des bisherigen Saldos und Einspeichern des neuen Saldos.

Die Auswertung der Ausgangssignale der Format-Gabelkoppler nach Patentanspruch 8 stellt sicher, daß eine Ermittlung und Verarbeitung des in der Magnetspur abgespeicherten Ist-Saldos nur dann erfolgt, wenn das Lese-Schreib-Gerät mit einer Saldokarte solcher Abmessungen gespeist wird, die für Verarbeitung in diesem Gerät vorgesehen ist.

Die weiterbildende Ausgestaltung nach Patentanspruch 9 stellt sicher, daß unmittelbar die Betätigung des Wahlschalters zur Auswahl unter angebotenen Dienstleistungen oder Waren zur Berücksichtigung der daraus resultierenden Belastung, also zur Einspeicherung des neuen Saldos in die Magnetspur im Zuge der Saldokarten-Ausgabe, führt. Weiterhin wird ermöglicht, den einzelnen Dienstleistungs- und Warenangeboten unterschiedliche Wertigkeiten zuzuordnen, die auch nicht in bestimmtem Verhältnis zueinander abgestuft sein müssen. Denn nun erfolgt die Belastung des bisherigen Saldos völlig frei nach Maßgabe der gewünschten Leistung, für die in einer Belastungsschaltung ein Gegenwert abgespeichert ist, der für die Neu-Saldobildung in die mit dem Ist-Saldo geladene Saldierschaltung übertragen wird.

Es kann aus psychologischen Gründen wie auch aus Gründen der Sicherheit bezüglich zweifelhafter Bonität von mit Saldokarten ausgestatteten Kunden zweckmäßig sein, bei Erreichen bzw. Unterschreiten eines vorgegebenen Soll-Saldos eine Signalgabe auszulösen, um den

Saldokartenbenutzer auf einen kritischen Stand seiner Kontos hinzuweisen, was durch die weiterbildende Maßnahme nach Patentanspruch 10 sichergestellt wird.

Die zusätzliche Maßnahme nach Patentanspruch 11 gewährleistet, daß ein vorgebbarer Saldo-Grenzwert nicht mehr durch weitere Betätigung des Wahlschalters unterschritten werden kann, beispielsweise weil das Kreditrisiko zu groß werden würde. Insbesondere kann es zweckmäßig sein, den Grenzwert auf Null einzustellen, also die Verfügbarkeit über das Dienstleistungs- bzw. Warenangebot dann zu beenden, wenn ein Vorschuß (Habensaldo), gegen den die Saldokarte ausgehändigt wurde, aufgebraucht ist. Wenn die auf der Magnetspur der Saldokarte abgespeicherte Information neben der Saldoangabe eine bei der Neusaldo-Abspeicherung wieder übertragene Benutzer-Identifikation beinhaltet, kann sogar ohne weiteres die Schaltanordnung dafür ausgelegt werden, den Grenzsaldo nach Maßgabe von Kreditwürdigkeitskriterien der einzelnen ihre Saldokarte in das Lese-Schreib-Gerät einführenden Personen zu variieren.

Die zusätzliche Maßnahme nach Patentanspruch 12 ermöglicht es, bei Erreichen des vorgegebenen Saldo-Grenzwertes die Verfügbarkeit über die eigene Saldokarte rückzugewinnen, indem eine Geldwertleistung erbracht wird, etwa Geld in einen Münzprüfer und -kassierer eingegeben wird, nach Maßgabe dessen eine Veränderung des Ist-Saldos zugunsten des Saldokarteninhabers erfolgt. Dieses neue Guthaben-Saldo kann dann wieder schrittweise, nach Maßgabe der Betätigung des Wahlschalters und der Inanspruchnahme des Dienstleistungs- oder Warenangebotes, verbraucht werden. Die Ausbildung nach Patentanspruch 12 eignet sich insbesondere aber auch zur erstmaligen Zurverfügungstellung einer Saldokarte gegen Entrichtung eines Grundbetrages vorgegebener oder beliebiger Höhe.

Die weiterbildende Maßnahme nach Patentanspruch 13 ist von besonderer praktischer Bedeutung, da jedenfalls der ungeübte Benutzer einer Saldokarte der hier betrachteten Art versucht sein kann, nach Betätigung des Wahlschalters und Kenntnisnahme vom daraus sich ergebenden neuen Saldo sich zur Entnahme einer Ware oder Inanspruchnahme einer Dienstleistung vom Lese-Schreib-Gerät zu entfernen, ohne zuvor seine Saldokarte mit dem auf der Magnetspur-abgespeicherten neuen Saldo aus dem Gerät entnommen zu haben. Indem die Freigabe beispielsweise eines Zutritts-Sperrgatters oder einer Warenautomaten-Öffnungsklappe erst dadurch erfolgt, daß die neu-beschriebene Saldokarte aus dem Lese-Schreib-Gerät wieder entnommen wird, ist sichergestellt, daß der Benutzer vor Inanspruchnahme der gewählten und schon saldierten Leistung seine Saldokarte wieder in Besitz nimmt.

Die Weiterbildung nach Patentanspruch 14 ermöglicht es, ohne das Erfordernis von Personaleinsatz eine Abrechnung des Endsaldos unter Ausgabe eines Guthabens und Löschung der Saldoinformation auf der Saldokarten-Magnetspur durchzuführen.

Infolge der zusätzlichen Maßnahme nach Patentanspruch 15 ist die erfindungsgemäße Schaltanordnung auch zur Erst- oder Neuausgabe einer Saldokarte an einen Interessenten geeignet.

Eine solche neue Saldokarte kann mit Null-Saldo oder mit einem Vorlage-Saldo zugunsten des Interesssenten ausgestattet sein. Besonders flexibel sind die Einsatzmöglichkeiten der erfindungsgemäßen Schaltanordnung bei Realisierung der zusätzlichen Maßnahme nach Patentanspruch 16, weil dann dem Interessenten eine Saldokarte mit abgespeichertem Saldo nach Maßgabe beispielsweise der gerade verfügbaren Kleingeldsumme ausgegeben werden kann, ohne daß umständlich nach passenden Geldbeträgen und/oder Münzsorten gesucht werden muß.

Gerade wegen der breiten Anwendungsmöglichkeiten ist es zweckmäßig, die zusätzliche Maßnahme nach Patentanspruch 17 vorzusehen. Denn über die Bildschirmansteuerung ist nicht nur ein Hinweis auf den Momentansaldo und ggf. das Erreichen eines nicht mehr unterschreitbaren Grenzsaldos bzw. auf Bedienungs-Versuch mit nicht passender Saldokarte möglich; vielmehr kann der Bildschirm über als solche dafür bekannte Elektronenstrahl-Steuerschaltungen auch zur Anzeige von Bedienungsanweisungen und sonstigen Hinweisen an den Benutzer herangezogen werden.

Gemäß der zusätzlichen Maßnahme nach Patentanspruch 18 ist es ohne großen schaltungstechnischen Mehraufwand zentral möglich, eine Schaltanordnung der erfindungsgemäßen Art einer Vielzahl von Dienstleistungs- und Warenangeboten unterschiedlichster Art und an unterschiedlichen Orten zuzuordnen und einer beliebig großen Anzahl an Interessenten zur Benutzung mittels Saldokarten zur Verfügung zu stellen. Jeglicher Aufwand für benutzerbezogene Registrierungen und Abrechnungen entfallen völlig, da jedem Benutzer seine Beanspruchung des Angebotes unmittelbar auf seiner Saldokarte angelastet wird, und zwar im Rahmen einer zu beliebigen Zeiten und um beliebige Beträge wieder auffüllbaren Vorleistung bzw. im Rahmen einer über (negativen) Saldo-Grenzwert eingebbaren Kreditlinie.

Die erfindungsgemäße Schaltanordnung ermöglicht es somit auf praktisch allen Gebieten des täglichen Lebens, im Bereich öffentlicher wie gewerblicher Dienstleistungsangebote und auf dem Warensektor, insbesondere in Bereichen, in denen ungünstige Betriebsbedingungen auftreten (Bibliotheken, Verkehrsmittel, Bäder, Sportanlagen, Tankeinrichtungen, Reinigungssalons; Automatenverkauf), die bargeldlose Bezahlung durch ein für Jedermann geeignetes Abbuchen betriegssicher und weitgehendst unmanipulierbar durchzuführen.

Die Merkmale und Vorteile der Erfindung ergeben sich aus nachstehender Beschreibung eines in der Zeichnung unter Beschränkung auf das Wesentliche als Funktions-Blockschaltbild vereinfacht dargestellten, bevorzugten Ausführungsbeispieles zur Erfindung.

Doppelt ausgeführte Linienzüge stellen Verbindungen zur Übertragung von (Mehrbit-)Informationen dar, während die einfach ausgeführten Linienzüge in der Zeichnung Schaltverbindungen zur Übermittlung von Steuersignalen zum Inhalt haben.

Ein Lese-Schreib-Gerät 1 mit Lesekopf 2 und Schreibkopf 3 ist dafür ausgelegt, jeweils eine Saldokarte 4 in Form eines kartenförmigen Informationsträgers mit einer Magnetspur 5 auf der Unterseite 6 einziehen bzw. wieder herausgeben zu können und dabei die auf der Magnetspur 5 magnetisch abgespeicherte Information abtasten bzw. verändern zu können. Diese Information ist binärkodiert und bevorzugt seriell in Richtung der Längserstreckung der Magnetspur 5 mehrfach hintereinander abgespeichert, so daß die abgespeicherte Information auch dann nicht verlorengeht, wenn die Saldokarte 4 beispielsweise aufgrund Knickverletzungen oder sonstiger mechanischer Einwirkungen an einem Ende gekürzt bzw. ein Teil der Magnetspur durch Abblättern vom Kartenträger-Material unbrauchbar geworden sein sollte.

Für den Transport der in einen Übergabeschlitz 7 eingeführten Saldokarte 4 innerhalb des Lese-Schreib-Gerätes 1 dient ein um zwei Umlenkrollen 8 geführtes unendliches, riemenförmiges Transportband 9 aus einem Material, das gewährleistet, daß unabhängig von zu erwartenden Temperaturschwankungen eine konstante Länge des Transportbandes 9 beibehalten bleibt. Für die Sicherstellung der Spannung des Transportbandes 9 kann aber auch vorgesehen sein, wenigstens eine der Umlenkrollen 8 in Bezug auf die Lager der anderen verschiebbar und unter Einfluß einer elastisch angreifenden Kraft anzuordnen.

Das aktive Trum 10 des Transportbandes 9 gleitet über die aktiven Oberflächen des Lesekopfes 2 und des Schreibkopfes 3 sowie über eine Führungsunterlage 11 hinweg, über die die Unterseite 6 der vom Transportband 9 ergriffenen Saldokarte 4 vor- bzw. zurückgeschoben wird. Die Führungsunterlage 11 weist eine schwitzwasserfreie, glatte Oberfläche 12 auf, die etwa durch eine Beschichtung mit einer Kunststoffplatte aus einer Trägerschicht von phenolharzgetränkten Natronzellulosepapieren und einer Deckschicht aus melaminharzdurchtränkten Edelsulfidzellulosepapieren oder aus einer anderen feuchtigkeitsunempfindlichen und abriebsfesten Kunststoffbeschichtung besteht, um sicherzustellen, daß beim Abtasten der Magnetspur 5 im Zuge des Vor- bzw. Rücktransports der Saldokarte 4 keine mechanischen oder elektrischen Störungen auftreten. Die über die Lese- und Schreibköpfe 2, 3 hinweggleitende Außenfläche 13 des Transportbandes 9 ist bevorzugt aufgerauht, um einerseits die Oberseite 14 bei der Vor- bzw. Rückbewegung durch das Lese-Schreib-Gerät 1 sicher zu greifen und, während nicht gerade eine Saldokarte 4 an den Lese- und Schreibköpfen 2, 3 vorbeigeführt wird, aufgrund der Scheuerbewegung deren aktive Flächen 15 zu reinigen.

Ein in seiner Drehrichtung umsteuerbarer Antriebsmotor 16 steht in mechanischer Drehverbindung 17 mit einer der Umlenkrollen 8, um je nach dem aus einer Umschalt-Logik 18 gelieferten Steuerbefehl das Transportband 9 zum Einziehen bzw. zum Herausfahren einer Saldokarte 4 in Bewegung zu setzen.

Zwischen dem Übergabeschlitz 7 und der vorderen Umlenkrolle 8 ist ein erster Format-Gabelkoppler 19 angeordnet, der die Breite und gegebenenfalls auch die Stärke der in den Übergabeschlitz 7 eingeführten Saldokarte 4 kontaktlos erfaßt und ein Ausgangssignal abgibt, wenn die entsprechenden Meßwerte mit vorgegebenen Werten übereinstimmen, wenn also insoweit eine für dieses Lese-Schreib-Gerät 1 bestimmte Informationsträger-Karte als Saldokarte 4 eingeführt wurde. Da aus Gründen der sicheren Datenerfassung die auf der Saldokarte 4 abgespeicherten Informationen seriell mehrfach in die Magnetspur 5 eingeschrieben sind, wäre es grundsätzlich möglich, eine hinsichtlich Breite und Stärke zugelassene Saldokarte 4 durch Halbieren zu duplizieren. Um sicherzustellen, daß das Lese-Schreib-Gerät 1 nicht mit einer unzulässig gekürzten Saldokarte 4 gespeist wird, ist hinter dem ersten Format-Gabelkoppler 19 ein weiterer Format-Gabelkoppler 20 angeordnet, und zwar in Längsrichtung der Führungsunterlage 11 um einen Abstand 1 hinter dem erstgenannten, der etwas kleiner ist, als die Länge K der Saldokarte 4, gemessen in Richtung der Längserstreckung ihrer Magnetspur 5. Ein UND-Gatter 21 liefert also nur dann ein Ausgangssignal, wenn sich im Zuge des Einziehens einer Saldokarte 4 mittels des Transportbandes 9 zwischen den beiden Format-Gabelkopplern 19, 20 eine Saldokarte 4 vorgegebener Geometrie befindet.

Distanzen L zwischen dem vorderen Beginn des aktiven Transportband-Trum 10, also der Linie auf der Führungsunterlage 11, in der diese von der vorderen Umlenkrolle 8 tangiert wird, und dem Streufeldschlitz als der aktiven Fläche 15 des Schreibkopfes 3 bzw. zwischen der aktiven Fläche 15 des Lesekopfes 2 und dem rückwärtigen Ende des aktiven Trum 10 ist wenigstens so groß, wie die Länge K der Magnetspur 5 auf der Saldokarte 4. Dadurch ist sichergestellt, daß die Gesamtheit aller hintereinander auf der Magnetspur 5 abgespeicherten Informationen vom Lesekopf 2 bzw. vom Schreibkopf 3 beim Einziehen bzw. beim Ausfahren der Saldokarte 4 einmal abgetastet werden.

Der Lesekopf 2 und der Schreibkopf 3 sind, wenn es sich um getrennte Bauelemente handelt, in Richtung des aktiven Trum 10 nebeneinander angeordnet, und zwar bevorzugt so, daß der Schreibkopf 3 in Richtung auf den Übergabeschlitz 7 vor dem Lesekopf 2 positioniert ist. Dadurch ist es möglich, im Zuge des Einziehens einer Saldokarte 4 die Magnetspur 5 zu beschreiben und die abgespeicherte Information sogleich zur Kontrolle wieder abzulesen, was allerdings in dem Prinzipschaltbild der Zeichnung nicht berücksichtigt ist. Zugleich ist es durch diese Anordnung ermöglicht, im Zuge des Herausfahrens der Saldokarte 4 aus einer rückwärtigen Umkehr- oder Warteposition zum Übergabeschlitz 7 hin die in die Magnetspur 5 eingespeicherte Information abzulesen und zu verarbeiten und leicht darauf zu verändern, beispielsweise bei Feststellung von Fehlern zu korrigieren.

In einem Abstand 1, der wiederum etwas kleiner ist als die Länge K der Saldokarte 4 gemessen in Richtung der Längserstreckung ihrer Magnetspur 5, hinter dem rückwärtigen Ende des aktiven Transportband-Trum 10 ist ein Rücksteuer-Gabelkoppler 22 angeordnet, der ein Signal ausgibt, wenn die Saldokarte 4 vollständig über den Lesekopf 2 hinweg eingezogen wurde, aber den Bereich zwischen der rückwärtigen Umlenkrolle 8 und der sie tangierenden Führungsunterlage 11 noch nicht verlassen hat.

Dieser Rücksteuer-Gabelkoppler 22 kann auch dichter an den Lesekopf 2 heranversetzt sein, wenn er mit einer Schaltanordnung zur Ermittlung des Einziehweges der Saldokarte 4 zusammenarbeitet. Wichtig ist nur, daß die Saldokarte 4 den aktiven Trum 10 nicht an seinem rückwärtigen Ende verläßt, um sie durch Umsteuern der Antriebsrichtung des Transportbandes 9 wieder ausfahren zu können.

Die auf der Magnetspur 5 einer Saldokarte 4 mehrfach hintereinander abgespeicherte Information stellt einen Wert-Saldo dar, der positiv (zugunsten des Karteninhabers lautend) oder negativ (zu Lasten des Karteninhabers lautend) sein kann. Dem Lesekopf 2 ist eine Leseschaltung 23 nachgeschaltet, wie sie aus der Magnetband-Speichertechnik als solche bekannt ist. Diese Leseschaltung 23 beinhaltet zweckmäßigerweise nicht nur eine Kontrollschaltung hinsichtlich ungestörter Datenaufnahme, die beispielsweise auf der Auswertung der hintereinander abgespeicherten übereinstimmenden Informationen in der Magnetspur 5 basieren kann, sondern außerdem eine Kontrollschaltung hinsichtlich eines Kodes, der aussagt, ob die in den Übergabeschlitz 7 eingeführte Saldokarte 4 eine solche ist, die der vorliegenden Anlage zugeordnet ist. Falls eines der Kriterien von der zugeordneten Kontrollschaltung innerhalb der Leseschaltung 23 nicht bestätigt werden kann, wird eine Fehleranzeige 24 angesteuert, die der Bedienungsperson einen entsprechenden Hinweis übermittelt und sie beispielsweise auffordert, eine andere (dem Aufdruck auf der Oberseite 14 zufolge diesem Lese-Schreib-Gerät 1 zugeordnete) Saldokarte 4 einzuführen. Außerdem wird über ein ODER-Gatter 25 in der Umschalt-Logik 18 der Ausfahr-Steuereingang 26 einer Umsteuerschaltung 27 für den Antriebsmotor 16 angesteuert, diese also sogleich auf umgekehrte Bewegungsrichtung des Transportbandes 9 zum Wieder-Ausfahren der falschen Saldokarte 4 umgesteuert, unter Sperrung einer Schreibschaltung 49.

Falls keine der Kontrollschaltungen innerhalb der Leseschaltung 23 ein Fehlkriterium ermittelt, wird die aus der Magnetspur 5 ausgelesene Saldo-Information an eine aus der kassen-Datentechnik als solche bekannte Saldierschaltung 28 übertragen. Ein ihr nachgeschaltetes Saldo-Anzeigegerät 29 zeigt dem Benutzer das auf seiner Saldokarte 4 vorhandene Saldo alphanumerisch an, beispielsweise über Anzeigeröhren oder ein Leuchtdiodenraster.

Wenn aufgrund vollständig über den Streufeldschlitz des Lesekopfes 2 hinweggezogener, ausgelesener Saldokarte 4 der rückwärtige oder Rücksteuer-Gabelkoppler 22 angesteuert wird, liefert er, z. B. über eine ihm nachgeschaltete Signalformerschaltung 30, ein Ausgangssignal über ein ODER-Gatter 31 an den Rücksetzeingang 32 einer bistabilen Kippstufe 33 in der Umschalt-Logik 18, um die Saldokarte 4 bis auf weiteres im Gerät 1 in Wartestellung stillzusetzen.

Diese bistabile Kippstufe 33 war zuvor vom Ausgangsignal des UND-Gatters 21 gesetzt worden, um den Einzieh-Steuereingang 35 der Umsteuerschaltung 27 für den Transportband-Antriebsmotor 16 bei Vorliegen einer zulässigen Saldokarte 4 am Anfang des aktiven Trum 10 anzusteuern und dabei, während dieser Einziehbewegung des Transportbandes 9, die Leseschaltung 23 freizugeben. Zugleich wird eine etwa noch gesetzte Ausfahr-Kippstufe 36 zurückgesetzt.

In der von der Saldokarte 4 nun erreichten rückwärtigen Wartestellung zwischen dem Rücksteuer-Gabelkoppler 22, in der der Antriebsmotor 16 abgeschaltet ist, wird ein Freigabesignal auf einen Freigabeeingang 37 eines Wahlschalters 38 gegeben. Durch beispielsweise manuelle Betätigung dieses Wahlschalters 38 kann der Benutzer der Anlage, dessen Saldokarte 3 sich momentan in jener rückwärtigen Wartestellung befindet, aus einem Dienstleistungs- oder Warenangebot seine Wahl treffen. Die getroffene Auswahl ist mit einer bestimmten Wertigkeit verbunden, die, nach Punkten oder unmittelbar in einer Währung verschlüsselt, aus einer Belastungsschaltung 39 in entsprechend verschlüsselter Form wie das Ausgangssignal der Leseschaltung 23 an die Saldierschaltung 28 übermittelt wird. Diese ermittelt den neuen, entsprechend verminderten Saldo, der daraufhin auf dem Saldo-Anzeigegerät 29 erscheint.

Der sich durch die Belastung neu ergebende Saldo am Ausgang der Saldierschaltung 28 wird ferner von einer Saldo-Vergleichsschaltung 40 abgefragt, an deren Vergleichseingang 41 ein Grenzsaldogeber 42 angeschlossen ist. Dieser kann auf einen gewünschten positiven Rest-Saldo eingestellt sein, der eine Garantie- oder Pfandfunktion zugunsten des Aufstellers der Anlage gegen den Benutzer hat, oder auf einen negativen Grenzsaldo nach Maßgabe der kreditwürdigkeit des Benutzers, der beispielsweise durch eine Identifikationsangabe im Rahmen der verschlüsselten Informationen auf der Magnetspur 5 individualisiert sein kann. Im dargestellten Beispielsfalle ist für die Veränderung des Grenzsaldos nach Maßgabe einer solchen Information ain Stelleingang 43 am Grenzsaldogeber 42 mit einem Informationsausgang 44 der Leseschaltung 23 verbunden.

Der Grenzsaldogeber 42 kann aber auch einfach auf den Wert Null eingestellt sein, um zugunsten des Betreibers einer solchen Anlage sicherzustellen, daß der Benutzer nie in negativen Saldo gerät.

Um den Inhaber der in das Lese-Schreib-Gerät 1 eingeführten Saldokarte 4 anzuzeigen, daß er einen vorgegebenen, auch auf dem Anzeigegerät 29 darstellbaren Grenzsaldo zu unterschreiten im Begriffe ist, wird vom Grenzwertausgang 45 der Vergleichsschaltung 40 ein optischer und/oder akustischer Signalgeber 46 angesteuert.

Wenn der Aufsteller einer Anlage mit der erfindungsgemäßen Schaltanordnung ein Unterschreiten des eingestellten Grenzsaldos nicht zulassen will, dann ist ein dem Grenzwertausgang 45 nachgeschalteter Blockierschalter 47 zu schließen. Diesem sind ein Sperreingang 48 einer Schreibschaltung 49 sowie ein Sperreingang 50 einer Freigabeeinrichtung 51 nachgeschaltet, und vom Blockierschalter 47 erfolgt außerdem über das ODER-Gatter 25 ein Setzen der Kippstufe 36 zur Ansteuerung des Ausfahr-Steuereinganges 26 an der Umsteuerschaltung 27 des Antriebsmotors 16. Während des Antriebes des Transportbandes 9 zum Zurückgeben der Saldokarte 4 aus ihrer bisherigen Ruhestellung im Bereiche des rückwärtigen Gabelkopplers 22 wird über das ODER-Gatter 31 der dominierende Rücksetzeingang 32 der bistabilen Kippstufe 33 angesteuert, um sicherzustellen, daß nicht auch gleichzeitig eine Ansteuerung des Einzieh-Steuereinganges 35 erfolgt.

Aufgrund dominierender Wirkung des Sperreinganges 48 erfolgt wieder keine Aktivierung des Schreibkopfes 3 bei dieser Ausgabebewegung der Saldokarte 4, also keine Neubelastung; die Saldokarte 4 wird vielmehr mit dem alten Saldo wieder ausgegeben, weil die aktuelle Anforderung über den Wahlschalter 38 zur Unterschreitung des Grenzsaldos geführt hätte.

Wenn jedoch die Saldo-Vergleichsschaltung 40 kein Ausgangssignal am Grenzwertausgang 45 führt, weil eine Saldo-Belastung aufgrund der aktuellen Betätigung des Wahlschalters 38 zulässig ist, wird dieser von der Saldierschaltung 28 ermittelte neue Saldo an die Schreibschaltung 49 übergeben. Außerdem wird vom Wahlschalter 38 über das ODER-Gatter 25 die Ausfahr-Kippstufe 36 gesetzt, also nur der Freigabeeingang 34 der Schreibschaltung 49 gleichzeitig mit dem Ausfahr-Steuereingang 26 für Rückbewegung der Saldokarte 4 aus ihrer Ruheposition im Bereich des Rücksteuer-Gabelkopplers 22 angesteuert. Diese Saldoinformation, gegebenenfalls kombiniert mit rückübertragenen Identitätsinformationen bezüglich des benutzten Lese-Schreib-Gerätes 1 oder der Person des Benutzers, wird mehrfach nacheinander über den Schreibkopf 3 in die Magnetspur 5 eingeschrieben, während die Saldokarte 4 hierüber hinweggeschoben wird, um die Saldokarte 4 am Übergabeschlitz 7 mit dem neuen Saldo auszugeben.

Infolge der Ansteuerung des Schreibkopfes 3 aus der Schreibschaltung 49 wird eine bistabile Kippstufe 52 in einer Freigabeschaltung 53 gesetzt, um ein Inhibit-Gate 54 vorzubereiten. Dieses liefert aber erst dann ein Ausgangssignal, wenn die zurückgefahrene Saldokarte 4 aus dem unmittelbar hinter dem Übergabeschlitz 7 angeordneten ersten Gabelkoppler 19 entnommen wurde. Über eine invertierende Verzögerungsstufe 55 wird die Kippstufe 52 nach einer einstellbaren Verzögerungszeit dann wieder zurückgesetzt.

Während dieser Verzögerungszeit, also nach Entgegennahme der Saldokarte 4 mit neuem, vermindertem Saldo, kann der Bediener des Wahlschalters 38 und Inhaber dieser Saldokarte 4 vom gewählten Dienstleistungs- oder Warenangebot Gebrauch machen, beispielsweise sich an den Ort eines Schließfaches begeben, das während dieser Verzögerungszeitspanne von der Freigabeeinrichtung 51 zur manuellen Öffnung und Waren-Entnahme infolge Ansteuerung eines Türmagnetverschlusses freigegeben ist.

Um bei Grenzsaldo-Annäherung oder gar -Unterschreitung das verfügbare Saldo wieder zu erhöhen, können Wertmarken, etwa Geld, in eine Kassiereinrichtung 56 eingegeben werden, während die Saldokarte 4 in ihrer Wartestellung im Bereich des rückwärtigen Gabelkopplers 22 verharrt, über die Signalformerschaltung 30 also dessen Freigabeeingang 57 angesteuert ist. Falls der Freigabeeingang 57 nicht angesteuert ist, kann je nach Auslegung der Kassiereinrichtung 56 das eingeworfene Geld bis auf weiteres gespeichert oder aber unmittelbar an eine Münzrückgabeeinrichtung 58 übergeben werden. Falls das Geld angenommen wird, weil der Freigabeeingang 57 angesteuert wird und beispielsweise eine Münzprüfeinrichtung in der Kassiereinrichtung 56 kein gegenteiliges Kommando liefert, und auch der Freigabeeingang 59 der Belastungsschaltung 39 angesteuert ist, erfolgt eine Umsetzung der Information aus der Kassiereinrichtung 56 zur Speisung der Saldierschaltung 28, an deren Ausgang nun der neue, um den entrichteten Betrag erhöhte Saldo erscheint. Zugleich erfolgt über das ODER-Gatter 25 wieder das Setzen der Ausfahr-Kippstufe 36 zur Ansteuerung des Steuereinganges 26, d. h., die Saldokarte 4 wird aus ihrer rückwärtigen Ruheposition in Richtung auf den Übergabeschlitz 7 vorgefahren, wobei nun der neue, positivere Saldo über den Schreibkopf 3 in die Magnetspur 5 eingeschrieben wird.

Eine Rückgewährtaste 60 ist vorgesehen, um einen etwaigen positiven Saldo auf der Saldokarte 4 soweit verfügbar aus der Münzrückgabeeinrichtung 58 auszahlen zu lassen, wenn die Saldokarte 4 eingelesen ist und in der rückwärtigen Wartestellung verharrt, der momentane Saldo also am Ausgang der Saldierschaltung 28 ansteht und somit auf dem Anzeigegerät 29 erscheint. Über ein andererseits dem Rücksteuer-Gabelkoppler 22 nachgeschaltetes UND-Gatter 61 wird bei Betätigung der Rückgewährtaste 60 der Freigabeeingang 62 einer der Saldierschaltung 28 nachgeschalteten Umsetzschaltung 63 angesteuert, die nach Maßgabe des ausgewiesenen Plus-Saldos auf der eingelesenen Saldokarte 4 die Münzrückgabeeinrichtung 58 ansteuert, während der Ausgang der Saldierschaltung 28 entsprechend zurückgesetzt wird. Zugleich wird vom Ausgang des UND-Gatters 61 über das ODER-Gatter 25 der Ausfahr-Steuereingang 26 angesteuert und, im Zuge der Rückbewegung der Saldokarte 4 über den Schreibkopf 3 hinweg an den Übergabeschlitz 7, dadurch die Saldo-Information auf der Magnetspur 5 entsprechend geändert.

Zur Ausgabe einer Saldokarte 4 an einen Benutzungs-Interessenten, der für dieses Lese-Schreib-Gerät 1 noch nicht über eine gültige Saldokarte 4 verfügt, ist ein Kartengeber 64 mit Vorratsmagazin 65, darunter angeordneter Ausgabewalze 66, Walzenantrieb 67 und Entnahmeschlitz 68 vorgesehen. Die im Vorratsmagazin 65 abgestapelten Saldokarten 4 können mit einem Anfangs-Saldo auf ihrer Magnetspur 5 versehen sein. Wenn ein entsprechender Wertbetrag in die Kassiereinrichtung 56 eingegeben wurde, ohne daß sich eine Saldokarte 4 im Bereich des rückwärtigen Gabelkopplers 22 befindet, wird ein Inhibit-Gate 69 durchgeschaltet, das einen Freigabeeingang 70 eines Anforderungsschalters 71 ansteuert. Dessen Betätigung löst nun den Start des Walzenantriebs 67 für Ausgabe der untersten Saldokarte 4 aus dem Vorratsmagazin 65 aus.

Es kann aber auch, wie in der Zeichnung gestrichelt berücksichtigt, vorgesehen sein, eine Saldokarte bei einer Vorleistung in beliebiger Höhe an der Kassiereinrichtung 56 auf Betätigung des Anforderungsschalters 71 zur Verfügung zu stellen, die dann mit dem entsprechenden positiven Saldo versehen ausgegeben wird. Hierfür wird die Saldokarte 4 aus dem Vorratsmagazin 65 nicht unmittelbar an einen Entnahmeschlitz 68 übermittelt, sondern über eine mechanische Umlenkführung 72 am rückwärtigen Ende der Führungsunterlage 11 vorgelegt, um ihre Magnetspur 5 daraufhin über den Schreibkopf 3 mit dem positiven Saldo zu versehen und sie am Übergabeschlitz 7 auszugeben.

Soll vorgesehen sein, nur negative Salden zu vermerken, dann erübrigt sich die Kopplung zwischen der Kassiereinrichtung 56 und dem Anforderungsschalter 71 über das Inhibit-Gate 69, und am Entnahmeschlitz 68 wird eine Saldokarte 4 mit dem Saldo Null ausgegeben.

Es sei betont, daß die Wartestellung einer Saldokarte 4 nicht im rückwärtigen Bereich des Lese-Schreib-Gerätes 1, unter dem Rücksteuer-Gabelkoppler 22, liegen muß, wie in der Zeichnung zur Vereinfachung der wesentlichen funktionellen Zusammenhänge angenommen. Für besondere Einsatzfälle kann es vielmehr zweckmäßig sein, nach dem Ablesen und Übertragen des Ist-Saldos in die Saldierschaltung 28 unter Löschung des Inhalts der Magnetspur 5 die Saldokarte 4 sogleich in den Bereich der Format-Gabelkoppler 19, 20 zurückzufahren und hier in Wartestellung verharren zu lassen. Für die Neueinschreibung des neuen Saldos werden ebenfalls eine solche Hin- und Herbewegung mit abschließender Ausgabe über den Übergabeschlitz 7 erforderlich, was dann aber beispielsweise eine Realisierung der schon erwähnten Kontrollmöglichkeiten durch unmittelbares Auslesen der soeben neu auf die Magnetspur 5 eingeschriebenen Informationen ermöglicht.

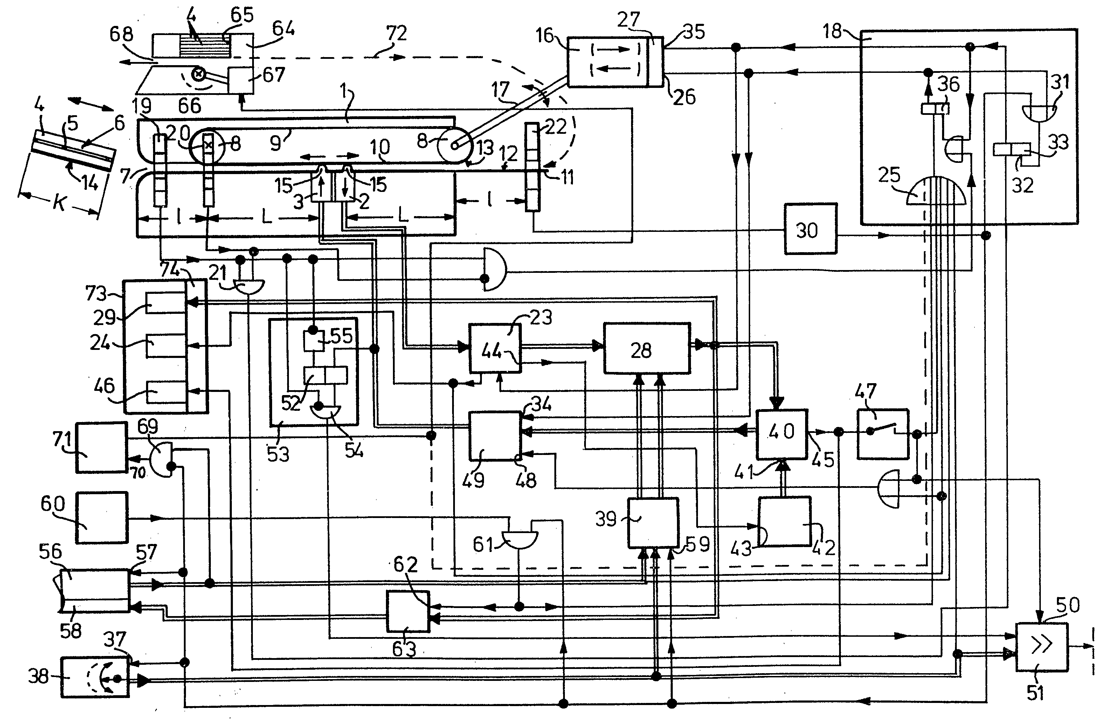

Das Saldo-Anzeigegerät 29, ein optischer Signalgeber 46 und Fehleranzeigen 24 lassen sich funktionell zusammenfassen und bedarfsweise alphanumerisch, gegebenenfalls zusammen mit ergänzenden Informationen für den Benutzer, darstellen, wenn entsprechend dem bekannten Einsatz von Datensichtgeräten ein Bildschirmgerät 73 mit Zeichen-Darstellschaltung 74 eingesetzt wird, wie es in Fig. 1 symbolisch berücksichtigt ist. Für die Realisierung der Zeichen-Darstellschaltung 74 kann dabei auf die als solche in Zusammenwirken mit Mikroprozessoren bekannten Generatorschaltungen zur symbolischen und/oder alphanumerischen Informationsdarstellung zurückgegriffen werden. Insbesondere kann dann über die erläuterten speziellen Anzeigen hinaus bedarfsweise auf dem Bildschirmgerät 73 der momentan interessierende Teil einer Bedienungsanweisung, etwa in bezug auf die Betätigung des Anforderungsschalter 71 zur Karten-Erstausgabe mit oder ohne positiven Saldo, dargestellt werden, so daß der im Umgang mit der erfindungsgemäßen Schaltanordnung und dementsprechenden Lese-Schreib-Gerät 1 noch nicht Erfahrene nicht erst den entsprechenden Teil aus einer irgendwo angebrachten Bedienungsanleitung heraussuchen muß.

Bei der Darstellung des Wahlschalters 38 in der Zeichnung ist berücksichtigt, daß dieser verschiedene Stellungen einnehmen kann, was einer Auswahl unter verschiedenen gleichzeitig angebotenen Waren oder Dienstleistungen entspricht. Gemäß einer entsprechenden Kodierung schaltet die Freigabeeinrichtung 51 auf eine von verschiedenen möglichen Ausgabeleitungen, um beispielsweise eine bestimmte aller Öffnungsklappen eines Warenautomaten zur Waren-Entnahme freizugeben. Insbesondere kann das Lese-Schreib-Gerät 1 als Zentraleinrichtung auch für eine Vielzahl räumlich verteilter, über die Freigabeeinrichtung 51 ansprechbarer Vorrichtungen aufgestellt sein, etwa zentral für mehrere daran angeschlossene Treibstoff-Zapfsäulen oder Selbstbedienungs-Kopiergeräte. Das Kriterium ist lediglich, durch räumliche und zeitliche Zuordnung sicherzustellen, daß der Benutzer sich nach Entnahme der mit dem neuen Saldo versehenen Saldokarte an den Ort des Leistungsangebotes begeben kann, ohne daß zwischenzeitlich jemand unbefugt von der Tatsache Gebrauch macht, daß die Freigabeeinrichtung 51 schon angesteuert ist. Gegebenenfalls kann diese Ansteuerung aber nicht nur aufgrund der Dimensionierung der Verzögerungsstufe 55 zeitlich begrenzt vorgesehen sein, sondern auch mit einer nach Maßgabe der zu überbrückenden Entfernungen vorgegebenen zeitlichen Verzögerung erst ihre Ansteuerung erfahren. Zwischenzeitlich kann bereits ein weiterer Benutzer seine Saldokarte in das Lese-Schreib-Gerät 1 einführen und über den Wahlschalter 38 seine Wahl treffen, während nach Bedienung des bisherigen Benutzers die Freigabeeinrichtung 51 auf dieses neu angewählte Angebot umschaltet. Lediglich dort, wo sehr reger Publikumsverkehr herrscht, wie etwa an der Eingangssperre im Zugang zu öffentlichen Verkehrsmitteln oder Veranstaltungsräumen, ist es zu bevorzugen, dem Wahlschalter 38 eine einzige, feste Funktion zuzuordnen und Lese-Schreib-Geräte 1 der beschriebenen Art vielfach einzusetzen. In diesem Fall ist es zur Vermeidung von Staus zweckmäßig, darauf zu verzichten, Kartenausgabe-Anforderungsschalter 71, Rückgewährtasten 60 oder Kassier- und Münzrückgabeeinrichtungen 56, 58 vorzusehen, für die dann zweckmäßigerweise in räumlicher Nähe ein entsprechendes Lese-Schreib-Gerät 1 mit diesen Möglichkeiten aufgestellt ist, das vom Publikum nur bei entsprechendem Bedarf benutzt wird. Bei solcher vereinfachten Ausführungsform kann dann auch die Belastungsschaltung 39 entfallen, da keine unterschiedlichen Belastungen mehr vorkommen können.

Die erfindungsgemäße Schaltanordnung kann aber auch im Kassenbereich von Kaufhäusern od. dgl. vorteilhaft Einsatz finden, wobei dann der Wahlschalter 38 durch das Kassenpersonal bedient wird oder durch ein eigenes Lesegerät für von der Ware entnehmbaren Preisauszeichnungen ersetzt wird. Die Saldokarte 4 stellt dann die individuelle Kreditkarte des Kaufhaus-Kunden dar.

Die Saldoermittlung und -übertragung wird bei der praktischen Realisierung der erfindungsgemäßen Schaltanordnung zweckmäßigerweise ebenso, wie die Durchführung der Verriegelungs- und Steuerungsfunktionen, nicht über diskrete Schaltungen aus integrierten Grundbausteinen der digitalen Schaltungstechnik durchgeführt, sondern unter Einsatz eines Mikroprozessors mit ihm angeschlossenen Informations- und Steuerspeichern realisiert, wie es als solches aus der elektronischen Datenerfassung und -verarbeitung, z. B. in der Technik der elektronischen Registrierkassen, bekannt ist.

## Patentansprüche

1. Schaltanordnung zur Anzeige eines Wert-Saldos, wobei eine Saldierschaltung (28) eingangsseitig einerseits an ein Lese-Schreib-Gerät (1) mit Lese- und Schreibköpfen (2, 3) für eine auf einer Saldokarte (4) angeordnete Magnetspur (5) und andererseits an eine Belastungsschaltung (39) sowie ausgangsseitig an ein Saldo-Anzeigegerät (29) angeschlossen ist, dadurch gekennzeichnet, daß das Lese-Schreib-Gerät (1) ein mit seinem aktiven, mit der Saldokarte (4) in Berührung kommenden Trum (10) auf einer Führungsunterlage (11) gleitendes, über Umlenkrollen (8) umlaufendes Transportband (9) aufweist, das an einen umsteuerbaren Antriebsmotor (16) angekoppelt ist, daß die Lese- und Schreibköpfe (2, 3) in die Führungsunterlage (11) eingesetzt sind und daß vor dem aktiven Trum (10) zwei Format-Gabelkoppler (19, 20) in einem gegenseitigen Abstand (1) in Richtung des aktiven Trums (10) angeordnet sind.

2. Schaltanordnung nach Patentanspruch 1, dadurch gekennzeichnet, daß die Führungsunterlage (11) eine schwitzwasserfreie glatte Oberfläche (12) aufweist und das Transportband (9) als temperaturunabhängiger Riemen konstanter Länge mit rauher Außenfläche (13) ausgebildet ist.

3. Schaltanordnung nach Patentanspruch 1, dadurch gekennzeichnet, daß die Lese- und Schreibköpfe (2, 3) die Führungsunterlage (11) gegen das aktive Trum (10) anliegend durchragen.

4. Schaltanordnung nach Patentanspruch 1, dadurch gekennzeichnet, daß der gegenseitige Abstand (1) der zwei Format-Gabelkoppler (19, 20) etwas kleiner als die Länge (K) der Saldokarte (4), gemessen in Richtung ihrer Magnetspur (5), ist.

5. Schaltanordnung nach Patentanspruch 1, dadurch gekennzeichnet, daß die Distanz (L) zwischen dem vorderen Beginn des aktiven Trums (10) und dem Schreibkopf (3) sowie die Distanz (L) zwischen dem Lesekopf (2) und dem rückwärtigen Ende des aktiven Trums (10) jeweils wenigstens so groß wie die Länge der auf der Saldokarte (4) angeordneten Magnetspur (5) ist.

6. Schaltanordnung nach Patentanspruch 1, dadurch gekennzeichnet, daß der Schreibkopf (3) in Richtung auf den vorderen Beginn des aktiven Trums (10) vor dem Lesekopf (2) angeordnet ist.

7. Schaltanordnung nach Patentanspruch 1, dadurch gekennzeichnet, daß hinter dem rückwärtigen Ende des aktiven Trums (10) in einem Abstand (1), der etwas kleiner als die Länge (K) der Saldokarte (4) in Richtung ihrer Magnetspur (5) gemessen ist, ein Rücksteuer-Gabelkoppler (22) angeordnet ist.

8. Schaltanordnung nach Patentanspruch 1, dadurch gekennzeichnet, daß die Format-Gabelkoppler (19, 20) über ein UND-Gatter (21) und eine Umschalt-Logik (18) an einen Einzieh-Steuereingang (35) des Antriebsmotors (16) und an eine zwischen dem Lesekopf (2) und der Saldierschaltung (28) angeordnete Leseschaltung (23) angeschlossen sind.

9. Schaltanordnung nach Patentanspruch 7, dadurch gekennzeichnet, daß der Rücksteuer-Gabelkoppler (22) und ein Wahlschalter (38) über eine Umschalt-Logik (18) an einen Ausfahr-Steuereingang (26) des Antriebsmotors (16) und über die Belastungsschaltung (39) an eine zwischen der Saldierschaltung (28) und dem Schreibkopf (3) angeordnete Schreibschaltung (49) angeschlossen ist.

10. Schaltanordnung nach einem der vorangegangenen Patentansprüche, dadurch gekennzeichnet, daß eine Saldo-Vergleichsschaltung (40) vorgesehen ist, deren Saldo-Eingang der Saldierschaltung (28) und deren Vergleichseingang (41) einem Grenzsaldogeber (42) nachgeschaltet sind und deren Grenzwertausgang (45) ein Signalgeber (46) nachgeschaltet ist.

11. Schaltanordnung nach Patentanspruch 10, dadurch gekennzeichnet, daß der Grenzwertausgang (45) über einen Blockierschalter (47) auf einen Sperreingang (48) der Schreibschaltung (49) und über die Umschalt-Logik (18) auf den Ausfahr-Steuereingang (26) des Antriebsmotors (16) geschaltet ist.

12. Schaltanordnung nach einem der Patentansprüche 9 bis 11, dadurch gekennzeichnet, daß einer Kassiereinrichtung (56) die Saldierschaltung (28) und über die Umschalt-Logik (18) der Ausfahr-Steuereingang (26) nachgeschaltet sind und ein Freigabeeingang (57) der Kassiereinrichtung (56) dem Rücksteuer-Gabelkoppler (22) nachgeschaltet ist.

13. Schaltanordnung nach einem der Patentansprüche 9 bis 12, dadurch gekennzeichnet, daß dem vordersten Format-Gabelkoppler (19) sowie der Schreibschaltung (49) über eine Freigabeschaltung (53) eine warenaufbewahrungsspezifische Freigabeeinrichtung (51) nachgeschaltet ist.

14. Schaltanordnung nach einem der Patentansprüche 7 bis 13, dadurch gekennzeichnet, daß eine Umsetzschaltung (63) eingangsseitig mit einer Rückgewährtaste (60) und dem Rücksteuer-Gabelkoppler (22) verbunden ist und daß der Umsetzschaltung (63) ausgangsseitig eine nach Maßgabe des von der Saldierschaltung (28) ermittelten positiven Saldos angesteuerte Münzrückgabeeinrichtung (58) nachgeschaltet ist.

15. Schaltanordnung nach einem der vorangegangenen Patentansprüche, dadurch gekennzeichnet, daß ein Kartengeber (64) einem Anforderungsschalter (71) nachgeschaltet ist.

16. Schaltanordnung nach Patentanspruch 15, dadurch gekennzeichnet, daß der Kartengeber (64) mittels einer mechanischen Umlenkführung (72) für die Saldokarte (4) an das Lese-Schreib-Gerät (1) im Bereich des Rücksteuer-Gabelkopplers (22) angeschlossen und die Saldierschaltung (28) über die Belastungsschaltung (39) der mit dem Anforderungsschalter (71) verbundenen Kassiereinrichtung (56) nachgeschaltet ist.

17. Schaltanordnung nach einem der vorangegangenen Patentansprüche, dadurch gekennzeichnet, daß ein Bildschirmgerät (73) mit Zeichen-Darstellschaltung (74) der Saldierschaltung (28) sowie der Saldo-Vergleichsschaltung (40) nachgeschaltet ist.

18. Schaltanordnung nach einem der Patentansprüche 1—8, dadurch gekennzeichnet, daß einem Vielfach-Wahlschalter abseits des Lese-Schreib-Gerätes (1) am Lese-Schreib-Gerät (1) die zentral angeordnete Belastungsschaltung (39) und eine warenaufbewahrungsspezifische Vielfach-Freigabeeinrichtung    nachgeschaltet sind.

## Claims

1. Circuit arrangement for the indication of a value balance, with a balancing circuit (28) being connected on the input side to a reading-writing device (1) having reading and writing heads (2, 3) for a magnetic track (5) which is provided on a balance card (4), on the one hand, and to al loading circuit (39) on the other hand, and on the output side to a balance indicator device (29), characterized in that the reading-writing device (1) comprises a circulating conveyor belt (9) the active strand or part (10) of which touches the balance card (4), and which slides on a guidde base (11) and circulates via guide rollers (8), said strand of part being coupled to a reversible drive motor (16), in that the reading and writing heads (2, 3) are inserted into the guide base (11), and that two fork-type formate light barriers (19, 20) are provided ahead of the active strand or part (10) at a mutual distance (1) in the direction towards the active strand or part (10).

2. Circuit arrangement according to patent claim 1, characterized in that the guide base (11) has a condensation-free, smooth surface (12) and that the conveyor belt (9) is designed as a temperature-non-responsive belt of constant length having a rough outer surface (13).

3. Circuit arrangement according to patent claim 1, characterized in that the reading and writing heads (2, 3) project through the guide base (11) so that they will abut the active strand or part (10).

4. Circuit arrangement according to patent claim 1, characterized in that the mutual distance (1) of the two fork-type formate light barriers (19, 20) is somewhat shorter than the length (K) of the balance card (4), measured in the direction of its magnetic track (5).

5. Circuit arrangement according to patent claim 1, characterized in that the distance (L) between the front beginning end of the active part or strand (10) and the writing head (3), and the distance (L) between the reading head (2) and the rear end of the active part or strand (10) are respectively at least as long as the length of the magnetic track (5) which is provided on the balance card (4).

6. Circuit arrangement according to patent claim 1, characterized in that the writing head (3) is arranged in the direction towards the front beginning end of the active part or strand (10) ahead of the reading head (2).

7. Circuit arrangement according to patent claim 1, characterized in that a fork-type revertive light barrier (22) is arranged behind the rear end of the active part or strand (10) at a distance (1) which is somewhat shorter than the length (K) of the balance card (4) measured in the direction of its magnetic track (5).

8. Circuit arrangement according to patent claim 1, characterized in that the fork-type formate light barriers (19, 20) are, via an AND gate (21) and a switching logic (18), connected to a feed control inlet (35) of the drive motor (16) and to a reading circuit (23) which is provided between the reading head (2) and the balancing circuit (28).

9. Circuit arrangement according to patent claim 7, characterized in that the fork-type revertive light barrier (22) and one selector switch (38) are connected, via a switching logic (18), to a return control input (26) of the drive motor (16) and, via the load circuit (39), to a writing circuit (49) which is arranged between the balancing circuit (28) and the writing head (3).

10. Circuit arrangement according to any one of the preceding patent claims, characterized in that a balance-comparator circuit (40) is provided, which has its balance inlet connected to the outlet side of the balancing circuit (28), and the reference or comparator inlet (41) of which is connected to the outlet side of a limit balance communicator or pick-up (42), and the limit value output (45) of which has a signal generator (46) connected to its outlet side.

11. Circuit arrangement according to patent claim 10, characterized in that the limit value outlet or output (45) is connected, via a blocking switch (47), to a blocking or stop inlet (48) of the writing circuit (49) and, via the switching logic (18), to the return control input (26) of the drive motor (16).

12. Circuit arrangement according to any one of patent claims 9 to 11, characterized in that the balancing circuit (28) and, via the switching logic (18), the return control input (26) are connected to the outlet side of a cashing device (56), and in that a release input (57) of said cashing device (56) is connected to the outlet siede of the fork-type revertive light barrier (22).

13. Circuit arrangement according to any one of patent claims 9 to 12, characterized in that the foremost fork-type formate light barrier (19) and the writing circuit (49) have their outlet sides, via a release circuit (53), connected to a release device (51) which is specific for the stocking of the respective goods.

14. Circuit arrangement according to any one of patent claims 7 to 13, characterized in that a converter circuit (63) has its input side connected to a payback key (60) and the revertive fork-type light barrier (22), and that the converter circuit (63) has its outlet side connected to the outlet side of a coin change returning device (58) which is controlled in accordance with the positive balance which has been detected and determined by the balancing circuit (28).

15. Circuit arangement according to any one of the preceding patent claims, characterized in that a card-dispenser (64) is connected to the outlet side of a demand switch (71).

16. Circuit arrangement according to patent claim 15, characterized in that the card dispenser (64) is, by means of a mechanical deflecting guide means (72) for the balance card (74), connected to the reading-writing device (1) in the area of the revertive fork-type light barrier (22), and in that the balancing circuit (28) is, via the load circuit (39), connected to the outlet side of the cashing device (56) which is connected with the demand switch (71).

17. Circuit arrangement according to any one of the preceding patent claims, characterized in that a visual display unit (73) having a character- or symbol-displaying circuit (74) is connected to the outlet side of the balancing circuit (28) and to the balance comparator circuit (40).

18. Circuit arrangement according to any one of patent claims 1 to 8, characterized in that the outlet side of a multiple selector switch which is provided off the reading-writing device (1), is, on the reading-writing device (1), connected to the centrally arranged load circuit (39) and to a multiple releasing device which is specific for the storing of the respective goods.

**Revendications**

1. Arrangement de circuits servant à l'indication d'un solde valeur, où le côté d'entrée d'un circuit soldeur (28) est raccordé à un dispositif lecture-écriture (1) ayant des têtes lecture-écriture (2, 3) pour une trace magnétique (5) prévue sur une carte de solde (4) d'une part, et à un circuit de charge (39) d'autre part, et dont le côté sortie est raccordé à un dispositif indicateur (29) du solde, caracterisé en ce que le dispositif lecture-écriture (1) comporte une bande transporteuse (9) circulant sur des poulies de renvoi (8) et dont le brin actif (10) qui touche la carte de solde (4), glisse sur une base de guidage (11), cette bande transporteuse (9) étant couplée à un moteur réversible de commande (16), que les têtes lecture-écriture (2, 3) sont insérées dans la base de guidage (11), et que deux barrières lumineuses de format à fourche (19, 20) sont arrangées en avant du brin actif (10) à une distance mutuelle (1) en direction du brin actif (10).

2. Arrangement de circuits selon la revendication 1, caracterisé en ce que la base de guidage (11) comporte une surface (12) qui est libre d'eaux de condensation et qui est lisse, et que la bande transporteuse (9) est construite sous forme d'une courroie non-influencée par les températures et à une longueur constante, dont la surface extérieure (13) est rugueuse.

3. Arrangement de circuits selon la revendication 1, caractérisé en ce que les têtes lecture-écriture (2, 3) saillissent de la base de guidage (11) et touchent le brin actif (10).

4. Arrangement de circuits selon la revendication 1, caractérisé en ce que la distance mutuelle (1) des deux barrières lumineuses de format à fourche (19, 20) est un peu plus courte que la longueur (K) de la carte de solde (4), mesurée en direction de sa trace magnétique (5).

5. Arrangement de circuits selon la revendication 1, caractérisé en ce que la distance (L) entre le bout avant du brin actif (10) et la tête écriture (3), et la distance (L) entre la tête lecture (2) et le bout arrière du brin actif (10), ont respectivement au moins la même dimension que la longueur de la trace magnétique (5) qui se trouve prévu sur la carte de solde (4).

6. Arrangement de circuits selon la revendication 1, caractérisé en ce que le tête écriture (3) se trouve disposée en direction vers le bout avant du brin actif (10) et en avant de la tête lecture (2).

7. Arrangement de circuits selon la revendication 1, caractérisé en ce qu'une barrière lumineuse inverseur à fourche (22) est disposée derrière le bout arrière du brin actif (10), et ceci à une distance (l) qui est un peu inférieure à la longueur (K) de la carte de solde (4), mesurée en direction de sa trace magnétique (5).

8. Arrangement de circuits selon la revendication 1, caractérisé en ce que les barrières lumineuses de format à fourche (19, 20) sont, par une porte ET (21) et par une logique commutatrice (18), raccordées à une entrée de commande d'entraînement (35) du moteur de commande (16) et à un circuit lecture (23) qui est prévu entre la tête lecture (2) et le circuit soldeur (28).

9. Arrangement de circuits selon la revendication 7, caractérisé en ce que la barrière lumineuse inverseur à fourche (22) et un commutateur sélecteur (38) sont, par une logique commutatrice (18), raccordées à une entrée de commande de retour ou de repoussage (26) du moteur de commande (16) et, par le circuit de charge (39), à un circuit écriture (49) qui est disposé entre le circuit soldeur (28) et la tête écriture (3).

10. Arrangement de circuits selon une des revendications précédentes, caractérisé en ce qu'un circuit comparateur de solde (40) est prévu, dont l'entrée de solde est raccordée à la sortie du circuit soldeur (28) et dont l'entrée comparateur (41) est raccordée à la sortie d'un émetteur (42) d'une valeur limite, et qui a un émetteur de signaux (46) raccordé au côté sortie de la valeur limite (45).

11. Arrangement de circuits selon la revendication 10, caractérisé en ce que la sortie (45) valeur limite est, par un commutateur de verrouillage (47), raccordée à une entrée de blocage (48) du circuit écriture (49) et, par la logique commutatrice (18), à l'entrée de commande de retour ou de repoussage (26) du moteur de commande (16).

12. Arrangement de circuits selon une des revendication 9 à 11, caractérisé en ce que le circuit soldeur (28) et, par la logique sommutatrice (18), l'entrée de commande de retour ou de repoussage (26) sont raccordés ou côté sortie d'un dispositif d'encaissement (56), et qu'une entrée de déblocage (57) du dispositif d'encaissement (56) est raccordée à la sortie de la barrière lumineuse inverseur (22) à fourche.

13. Arrangement de circuits selon une des revendications 9 à 12, caractérisé en ce qu'un dispositif de déclenchement (51) à fonctionnement spécifique pour le stockage des marchandises respectives, est raccordé à la sortie de la barrière lumineuse de format à fourche (19) antérieure et du circuit écriture (49) par un circuit de déclenchement (53).

14. Arrangement de circuits selon une des revendications 7 à 13, caractérisé en ce que l'entrée d'un circuit convertisseur (63) est raccordée à une touche de retour ou de repaiement (60) et à la barrière lumineuse inverseur (22) à fourche, et qu'un dispositif (58) de retour de monnaie est raccordé à la sortie du circuit convertisseur (63), ledit dispositif de retour de monnaie étant commandé en fonction du solde positif qui a été déterminé par le circuit soldeur (28).

15. Arrangement de circuits selon une des revendications précédentes, caractérisé en ce qu'un émetteur de cartes (64) est raccordé à la sortie d'un commutateur de demande (71).

16. Arrangement de circuits selon la revendication 15, caractérisé en ce que l'émetteur de cartes (64) est raccordé, au moyen d'un guidage renverseur (72) mécanique pour la carte de solde (4), au dispositif lecture-écriture (1) dans la zone de la barrière lumineuse inverseur à fourche (22), et que le circuit soldeur (28) est, par le circuit de charge (39), raccordé à la sortie du dispositif d'encaissement (56) qui est raccordé au commutateur de demande (71).

17. Arrangement de circuits selon une des revendications précédentes, caractérisé en ce qu'un poste d'écran de visualisation (73) ayant un circuit d'affichage ou de présentation de caractères ou de symboles (74) est raccordé à la sortie du circuit soldeur (28) et au circuit comparateur de solde (40).

18. Arrangement de circuits selon une des revendications 1 à 8, caractérisé en ce que le circuit de charge (39) qui est disposé d'une façon centrale, et un dispositif de déclenchement multiple à fonctionnement spécifique pour le stockage des marchandises respectives sont au dispositif lecture-écriture (1) raccordés à la sortie d'un commutateur sélecteur multiple qui se trouve hors du dispositif lecture-écriture (1).

0 006 596

1/1